# EUROPÄISCHE PATENTSCHRIFT

(11) **EP 2 051 150 B1**
(45) Veröffentlichungstag und Bekanntmachung des Hinweises auf die Patenterteilung: **16.03.2011**
(21) Anmeldenummer: 07020255.1
(22) Anmeldetag: 16.10.2007
(51) Int. Cl.: G05B 19/05

(54) **Verfahren zur automatischen Modifikation eines Programms**
Method for automatic modification of a program
Procédé de modification automatique d'un programme

(43) Veröffentlichungstag der Anmeldung: 22.04.2009
(73) Patentinhaber: SIEMENS AKTIENGESELLSCHAFT, 80333 München (DE)
(72) Erfinder: Extra, Johannes, 91052 Erlangen (DE)

(56) Entgegenhaltungen:
- WO-A-00/17749
- WO-A-2006/063616
- DE-A1- 10 234 304
- DE-A1-102006 005 365
- US-A1- 2002 067 504
- US-A1- 2003 041 127
- US-A1- 2004 015 952
- US-B1- 6 930 785

## Beschreibung

Die Erfindung betrifft ein Verfahren zur automatischen Modifikation eines Programms eines Automatisierungssystems.

Verfahren zur Modifikation von Firmware und/oder Software von Automatisierungssystemen sind allgemein bekannt. Der Begriff Automatisierungssystem umfasst dabei sämtliche Geräte oder Einrichtungen, also neben z.B. Steuerungen, wie speicherprogrammierbaren Steuerungen, Prozessrechnern, (Industrie-) Computern und dergleichen auch Antriebssteuerungen, Frequenzumrichter und Ähnliches, wie sie zur Steuerung, Regelung und/oder Überwachung technologischer Prozesse z.B. zum Umformen oder Transportieren von Material, Energie oder Information etc. eingesetzt werden oder einsetzbar sind, wobei insbesondere über geeignete technische Einrichtungen, wie z.B. Sensoren oder Aktoren, Energie aufgewandt oder gewandelt wird.

Bei einer Initiation einer solchen Modifikation, also z. B. einem Update oder Upgrade, wird in der Regel ein Anwender des Automatisierungssystems aktiv. Der Anwender bedient sich dabei eines Hardware- oder Software-"Werkzeuges", mittels welchem er eine Firmware und/oder ein Programm des Automatisierungssystems in das Automatisierungssystem, insbesondere die Firmware und/oder Software, überträgt. Zusätzlich ist eine wiederum durch den Anwender ausgelöste Wirksamschaltung zwischen der bisherigen und der aktualisierten Soft-/Firmware, also z. B. eine Installation, notwendig.

Bei einer automatisierten Alternative zu einer solchen Modifikation stellt eine sich auf einem entfernt von dem Automatisierungssystem angeordneten Server befindende Anwendung eine kommunikative Verbindung zum Automatisierungssystem her. Die Anwendung überprüft die Firmware und/oder Software des Automatisierungssystems und überträgt gegebenenfalls eine aktuellere Firm- und/oder Software in das Automatisierungssystem. Diese wird nach der Übertragung von der Anwendung auf dem Automatisierungssystem wirksam geschaltet.

Nachteilig bei diesem allgemein bekannten Verfahren ist jedoch, dass eine Aktivität "von außen" für die Modifikation notwendig ist, also beispielsweise ein Anwender tätig werden muss oder eine Anwendung auf dem entfernt angeordneten Server. Dabei ist also das Automatisierungssystem bzw. dessen Firm- und/oder Software von einem Nutzer bzw. von einem spezifischen Server abhängig.

Ein Beispiel für ein Verfahren zur Aktualisierung eines Gerätetreibers einer Bedieneinheit für ein Feldgerät der Prozessautomatisierungstechnik ist aus der WO 2006/063616 A1 bekannt. Bei einem Verfahren zur Inbetriebnahme eines Feldgerätes der Prozessautomatisierungstechnik ermittelt die Bedieneinheit den aktuellsten Gerätetreiber für das Feldgerät mittels eines Feldgerätehersteller-Service-Servers. Die hierfür notwendigen Informationen liest das Bedienprogramm aus dem Feldgerät aus. Wird in der Bedieneinheit kein bzw. nicht der aktuellste Gerätetreiber für das Feldgerät eingesetzt, so wird der aktuelle Gerätetreiber vom Feldgerätehersteller-Service-Server in die Bedieneinheit geladen,um eine Bedienung des Feldgerätes überhaupt zu ermöglichen bzw. optimiert zu gewährleisten.

Eine Aufgabe der Erfindung besteht somit darin, ein verbessertes Verfahren zur automatischen Modifikation eines Programms eines Automatisierungssystems, z. B. eines Firmwarekomponenten umfassenden Programms, insbesondere Steuerungsprogramms und dergleichen, anzugeben, bei welchem das Automatisierungssystem unabhängig von einer Anwendung auf einem Server und/oder einer Nutzeraktion ist.

Diese Aufgabe wird erfindungsgemäß gelöst durch ein Verfahren zur automatischen Modifikation eines Programms des Automatisierungssystems, wie es in dem unabhängigen Anspruch 1 definiert ist. Dazu ist vorgesehen, dass mittels eines dem Automatisierungssystem zugeordneten Identifikationsmittels ein auf eine Programmkomponente, welche z. B. in einem nichtflüchtigen Speicher, z. B. einem EPROM, EEPROM, gepufferten RAM, einer Speicherkarte, Festplatte und dergleichen hinterlegt oder hinterlegbar ist, bezogenes erstes Datum ermittelt wird. Mittels eines Auswahlmittels, beispielsweise eines Software- und/oder Hardware-Auswahlmittels, wie z. B. eines Auswahlprogramms, einer Auswahlroutine, einer Subroutine oder dergleichen, wird auf Basis des ersten Datums ein in zumindest einer Datenbasis hinterlegtes oder hinterlegbares Datenobjekt, insbesondere ein Datenobjekt mit Programmcodedaten - im Folgenden als Programmcodeobjekt bezeichnet - ausgewählt und das Programm des Automatisierungssystems mittels des Programmcodeobjekts zumindest teilweise modifiziert, indem das Programmcodeobjekt in das Programm integriert wird. Hierdurch wird gewährleistet; dass die Modifikation automatisch vom Automatisierungssystem selbst initiiert und durchgeführt wird. Das Identifikationsmittel kann beispielsweise als Software realisiert sein.

Vorteilhafte Ausgestaltungen der Erfindung sind Gegenstand der Unteransprüche.

Bevorzugt umfasst das Programm zumindest Firmwarekomponenten, wobei mittels eines dem Automatisierungssystem zugeordneten Identifikationsmittels ein auf eine Firmwarekomponente als Programmkomponente bezogenes erstes Datum ermittelt wird und wobei das Programm mittels des Programmcodeobjekts zumindest teilweise modifiziert wird, indem das Programmcodeobjekt als Firmwarekomponente in das Programm integriert wird. Hierdurch wird eine einfache Modifizierung und/oder Aktualisierung des Programms, insbesondere mittels der Firmwarekomponente, gewährleistet.

In einer bevorzugten Ausführungsform ist die Datenbasis zumindest einem Server zugeordnet, wobei der Server entfernt vom Automatisierungssystem angeordnet oder ein integraler Bestandteil des Automatisierungssystems oder eines weiteren Automatisierungssystems sein kann.

Bei einem entfernt vom Automatisierungssystem angeordneten Server ist z. B. ein Hinterlegen von Programmcodeobjekten vereinfacht. Zudem kann die Datenbasis auf einfache Art erweitert, ergänzt, vergrößert, verschoben und dergleichen werden; auch ein modularer Aufbau der Datenbasis aus austauschbaren Subdatenbasen ist möglich. Die Datenbasis kann dabei integraler Bestandteil des Servers sein oder sie kann mit diesem leitungsgebunden oder leitungslos kommunikativ verbunden sein. Dabei bezieht sich leitungsgebunden hier und im Folgenden z. B. auf ein Kabel, einen Leiter und/oder dergleichen und leitungslos z. B. auf eine Richtfunkstrecke, ein W-LAN (wireless lan), Bluetooth, Infrarot, Laser, wireless Firewire und dergleichen. Der Server und das Automatisierungssystem können dabei ebenfalls leitungsgebunden oder leitungslos kommunikativ miteinander verbunden oder verbindbar sein. Zudem können Server und Automatisierungssystem beispielsweise direkt oder indirekt, z. B. mittels des Internets, verbunden sein. Zudem können mehrere Automatisierungssysteme auf einen Server zugreifen und so beispielsweise ein Netzwerk in einer Sternkonfiguration bilden oder es kann eine Ringkonfiguration, eine Linienkonfiguration oder eine Kombination aus Stern-, Ring- und/oder Linienkonfiguration vorgesehen sein, was eine Wartung und/oder Aktualisierung oder dergleichen vereinfacht und somit zu einer Kostenreduktion beiträgt.

Besonders bevorzugt sind das Auswahlmittel, das Identifikationsmittel oder das Auswahl- und das Identifikationsmittel als Programmkomponenten, also als Bestandteile des gegebenenfalls zu aktualisierenden Programms des Automatisierungssystems, ausgeführt. Hierdurch wird eine hohe Flexibilität z. B. durch eine einfache Änderbarkeit, z. B. Update- und/oder Upgradefähigkeit, gewährleistet. Alternativ kann zumindest eines dieser Mittel als zumindest eine externe, also nicht dem Programm zugeordnete Komponente ausgeführt sein, welche Zugriff auf das Programm oder zumindest auf Komponenten des Programms hat. Zudem oder alternativ können Auswahlmittel und/oder Identifikationsmittel als Hardware ausgeführt sein.

Bevorzugt werden zumindest ein auf die Programmkomponente, also z. B. die Firmwarekomponente, bezogenes zweites Datum und zumindest ein auf das ausgewählte Programmcodeobjekt bezogenes drittes Datum verglichen, beispielsweise mittels eines Vergleichers, und das Programm in Abhängigkeit von einem Ergebnis des Vergleichs zumindest teilweise modifiziert. Dabei können z. B. zweites und drittes Datum eine Versionsnummer, ein Erstellungsdatum, ein Änderungsdatum, eine Referenznummer, eine Kombination aus diesen und/oder dergleichen sein. Hierdurch wird sichergestellt, dass das ausgewählte Programmcodeobjekt eine Aktualisierung, eine Verbesserung, eine Erweiterung, eine Änderung oder eine sonstige gewünschte Modifikation des Programms gewährleistet. Somit kann gewährleistet werden, dass eine Programmkomponente, insbesondere eine Firmwarekomponente, als welche das Programmcodeobjekt in das Programm integriert wird, aktueller ist als eine bereits im Automatisierungssystem vorhandene, korrespondierende Programmkomponente, dass also z.B. ein Update/Upgrade oder Downgrade ausgeführt wird.

Besonders bevorzugt ist das zweite Datum aus dem Programm entnehmbar oder ermittelbar. Zudem kann das dritte Datum aus dem Programmcodeobjekt entnehmbar oder ermittelbar sein. Bei dem zweiten, dem dritten, oder beiden Daten kann es sich dabei um eine Versionsnummer, ein Erstellungsdatum, ein Änderungsdatum, eine Referenznummer, einen Programmnamen, eine Losgröße, eine Losidentifikation oder dergleichen oder eine Kombination daraus handeln. Entnehmbar meint hier und im Folgenden, dass beispielsweise zumindest ein Datum aus dem Programm (zweites Datum) oder dem Programmcodeobjekt (drittes Datum) direkt verwendbar ist oder z. B. auf Basis eines Algorithmus oder dergleichen aus dem Programm oder aus zumindest einem Teil des Programms ermittelbar ist. Zudem oder alternativ kann zumindest ein Datum extern, also nicht im Programm, hinterlegt oder hinterlegbar sein, und direkt als zweites oder drittes Datum oder indirekt als Eingangswert für den Algorithmus Verwendung finden. Hierdurch wird eine gute Änderbarkeit von zweitem und/oder drittem Datum gewährleistet, woraus sich eine verbesserte Adaptierbarkeit des Verfahrens an eine Weiterentwicklung des Automatisierungssystems oder der Automatisierungstechnologie ergibt.

Zudem oder alternativ kann das erste Datum eine Versionsnummer, ein Erstellungsdatum, ein Änderungsdatum, eine Referenznummer, ein Programmname, eine Losidentifikation (z. B. ein Losname oder dergleichen), eine Losgröße, eine Hardwareidentifikation, wie beispielsweise eine Board Id (Identification), eine Prozessor Id und/oder eine MAC Adresse (Media Access Control), und/oder dergleichen sein, und weiterhin kann das erste Datum mit dem zweiten Datum korrespondieren, also das zweite Datum beispielsweise aus dem ersten Datum ermittelbar oder mit diesem identisch sein.

Bevorzugt wird das Verfahren mittels eines Initialisierungsmittels, welches z. B. als eine Software- und/oder Hardwarekomponente ausgeführt sein kann, im Zusammenhang mit einer Initialisierung des Programms, einem Programmabschluss, einer Programmunterbrechung, einer Programmpause oder dergleichen aufgerufen und/oder ausgeführt. Als Initialisierung des Programms wird hier beispielsweise eine Aktivierung des Programms, z. B. während eines "Hochfahrens" des Automatisierungssystems oder dergleichen, bezeichnet. Zudem kann das Initialisierungsmittel dabei prüfen, ob das Verfahren zur automatischen Änderung durchgeführt werden kann, also ob das Programmcodeobjekt in das Programm integriert werden kann. Alternativ kann eine solche Prüfung durch das Initialisierungsmittel initiierbar und/oder steuerbar sein. Somit wird sichergestellt, dass beispielsweise während einer Laufzeit des Programms nur solche Programmkomponenten, insbesondere Firmwarekomponenten, geändert werden, durch deren Austausch ein durch das Programm gesteuerter Automatisierungsprozess nicht gestört, gehindert, unterbrochen oder sonst wie beeinträchtigt wird. Eine Wirksamschaltung aktualisierter Programmkomponenten, insbesondere Firmwarekomponenten, durch deren Integration in das Programm kann zeitlich von der Einspielung, also der Übertragung, entkoppelt sein. Dabei kann das Programmcodeobjekt in einer Datenbasis vorgehalten werden, bis die Prüfung mittels des Initialisierungsmittels ergeben hat, dass die Wirksamschaltung durchgeführt werden kann, ohne den Betrieb des Automatisierungssystems zu beeinträchtigen.

Das Programm kann ausschließlich in einem nicht flüchtigen Speicher, also z. B. einem EPROM, EEPROM, gepufferten RAM, einer Speicherkarte, Festplatte oder dergleichen hinterlegte oder hinterlegbare Firmwarekomponenten umfassen. Hierdurch wird eine einfache, komfortable und kostengünstige Änderbarkeit, z. B. ein Update oder Upgrade, des Programms, insbesondere der Firmware und/oder der Firmwarekomponenten, gewährleistet.

Bezüglich des Automatisierungssystems ist bevorzugt vorgesehen, dass das Automatisierungssystem und der Server zumindest eine allgemein bekannte Schnittstelle zur kommunikativen Verbindung des Automatisierungssystems mit dem Server umfassen.

Für das oder jedes erste Datum kann in der Datenbasis zumindest ein Programmcodeobjekt hinterlegt oder hinterlegbar sein, so dass auf Basis des ersten Datums ein oder mehr als ein hinterlegtes Programmcodeobjekt ausgewählt und in das Automatisierungssystem übertragen werden, wo sie dann zeitnah oder von der Übertragung entkoppelt wirksamgeschaltet (aktivgeschaltet) werden.

Dem oder jedem Programmcodeobjekt in der ersten Datenbasis können dabei, z. B. in einer Referenztabelle, ein oder mehrere zusätzliche(s) Programmcodeobjekt(e) zugeordnet sein, welche beispielsweise für eine korrekte Ausführbarkeit des Programmcodeobjekts nach dessen Integration in das Programm oder für eine Ausführbarkeit des Programms insgesamt notwendig oder gewünscht sind, oder welche zusätzliche Funktionen für das zu integrierende Programmcodeobjekt umfassen. Hierdurch wird beispielsweise erreicht, dass bei einer Integration von Programmcodeobjekten, die zusätzliche Funktionalität erfordern, diese von dem Integrationsvorgang gleich mit erfasst werden.

Das Auswahlmittel und/oder Identifikationsmittel kann z. B. in einer zweiten Datenbasis, welche dem Automatisierungssystem zugeordnet oder ein integraler Bestandteil des Automatisierungssystems ist, hinterlegt oder hinterlegbar sein. Hierdurch wird eine einfache Änderbarkeit oder Austauschbarkeit von Auswahlmittel und/oder Identifikationsmittel durch ein Ersetzen der zweiten Datenbasis durch eine andere zweite Datenbasis gewährleistet.

Das zweite Datum und das dritte Datum können beispielsweise von einem in Hard- oder Software ausgeführten Vergleichsmittel verglichen werden. Dieses kann in Abhängigkeit vom Ergebnis des Vergleichs ein Signal erzeugen, welches die Modifikation des Programms freischaltet. Dabei kann die Modifikation auch zeitlich von der Freischaltung entkoppelt sein. Beispielsweise kann das erste Datum und/oder das zweite Datum aus dem Programm und/oder das dritte Datum aus dem Programmcodeobjekt mittels zumindest einer ersten Bestimmungskomponente des Programms, also z. B. einem Unterprogramm des Programms, aus dem Programm selber oder aus für das Programm hinterlegten Daten, entnommen und/oder ermittelt werden.

Der Vorteil der Erfindung und ihrer Ausgestaltungen besteht somit insbesondere darin, dass eine Aktivität bezüglich der automatischen Modifikation, z. B. eine Initiation und/oder Ausführung der automatischen Modifikation, eines in einem Automatisierungssystem zu aktualisierenden Programms (insbesondere des zumindest eine Firmwarekomponente umfassenden Programms) von dem Automatisierungssystem oder dem Programm selbst ausgeht. Es ist somit insbesondere keine Aktivität "von außen", also z. B. von einem Benutzer und/oder einem externen Server mit einer Anwendungssoftware, nötig. Die Anwendungssoftware des Servers wäre hier für einen Aufbau einer Verbindung zum Automatisierungssystem, ausgehend vom Server, nötig. Sie würde eine Prüfung einer Aktualität der Firmwarekomponente, des Programms und dergleichen bewerkstelligen und beispielsweise eine aktuellere Firmwarekomponente oder ein aktuelleres Programm in das Automatisierungsgerät übertragen. Zudem würde die Anwendungssoftware des Servers die übertragene Firmware oder das übertragene Programm im Automatisierungssystem wirksam schalten.

Ein weiterer Vorteil der Erfindung und ihrer Ausgestaltungen ist zudem, dass beispielsweise verschiedenartige Produktionen durch eine Maschine mit einem oder mehreren Automatisierungssystemen möglich sind. Programmcodeobjekte, welche z. B. zur Produktion erforderliche Daten umfassen, werden dabei beispielsweise automatisch oder durch den Anwender im Zusammenhang mit einem Zeitpunkt, zu dem diese Produktion stattfinden soll, auf dem Server (und/oder in der dem Server zugeordneten Datenbasis) hinterlegt. Das Automatisierungssystem "sucht" permanent oder in zeitlichen Abständen nach "passenden" Programmcodeobjekten und lädt diese automatisch von dem Server oder aus der Datenbasis. Diese Programmcodeobjekte können dann zudem automatisch aktiviert werden.

Dabei kann zumindest ein in der Datenbasis hinterlegtes Datenobjekt ein auf einen Produktionsvorgang bezogenes Datum oder bezogenen Datensatz darstellen oder in seiner Ausprägung als Programmcodeobjekt solche Daten umfassen. Das Datum oder der Datensatz beschreibt dabei beispielsweise eine Losgröße, Losidentifikation, eine Identifikation eines abzuarbeitenden Programms, eine Werkzeugidentifikation, Temperatur, Geschwindigkeit und dergleichen. Somit können an einer "zentralen Stelle" für ein Automatisierungssystem oder eine Gruppe von Automatisierungssystemen produktionsprozess-relevante Daten auf einfache und kostengünstige Art und Weise hinterlegt werden, wo sie dem oder den Automatisierungssystem(en) zum "Abruf" bereitstehen. Da das Automatisierungssystem permanent oder in zeitlichen Abständen überprüft, ob Daten oder Datensätze für es hinterlegt sind, stehen dem Automatisierungssystem schnell die jeweils zu verwendenden Daten zur Verfügung, was eine hohe Flexibilität bei einer Produktionssteuerung und eine schnelle Anpassbarkeit an veränderte Produktionsbedingungen, Edukte, Produkte, zu produzierende Mengen, Werkzeuge, Produktionsabläufe und dergleichen bedingt. So kann es beispielsweise sein, dass ein Produktionsschritt bei einer Temperatur T1 mittels des Automatisierungssystems durchgeführt wird. Wenn sich jedoch herausstellt, dass dessen Effizienz dadurch steigerbar ist, dass dieser bei einer geänderten Temperatur T2 durchgeführt wird, so kann einfach und schnell ein diese Temperatur (T2) umfassendes Daten- oder Programmcodeobjekt in der dem Server zugeordneten Datenbank hinterlegt werden. Dieses wird dort vom Automatisierungssystem aufgrund einer vom Automatisierungssystem durchgeführten Überprüfung der in der Datenbasis hinterlegten Daten/Datensätze "gefunden", heruntergeladen und in das Programm integriert, so dass der Produktionsschritt nun bei der veränderten Temperatur T2 durchgeführt wird.

Des Weiteren wird durch die Erfindung und ihre Ausgestaltungen zudem ein einfaches Einspielen einer anderen Version, z. B. einer Firmware/von Firmwarekomponenten, Projekt(en), Programm(en) und dergleichen ermöglicht. Zudem kann beispielsweise zwischen zwei Produktionskonfigurationen zumindest eine Wartungskonfiguration einspielbar und aktivierbar sein.

Da in der vorliegenden Erfindung das Automatisierungsgerät das Programm umfasst, welches eine Kommunikationsverbindung zu dem mit der ersten Datenbasis assoziierten Server aufbaut oder den Aufbau initiiert oder steuert, ist es nicht nötig z. B. eine elektronische Schutzmaßnahme freizuschalten, wie z. B. eine Firewall, welche das Automatisierungsgerät vor unbefugtem Zugriff schützt. Zudem ist z. B. eine Authentifizierung und/oder Autorisierung "von außen" zugreifender Anwender, Anwendungssoftware im Server, eines Software- oder Hardware-"Werkzeugs" nicht notwendig, wodurch sich u. a. ein Bedienkomfort des Automatisierungssystems erhöht.

Da zudem eine einfache Erweiterung der ersten Datenbasis, z. B. um weitere Speicherkomponenten, einfach und preiswert möglich ist, kann eine große Zahl von Programmcodeobjekten an einer zentralen Stelle vorgehalten werden, was eine weitere Vereinfachung und eine Kostenreduzierung mit sich bringt.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Darin zeigen
- FIG 1: eine schematische Darstellung eines erfindungsgemäßen Automatisierungssystems mit einem automatisch modifi- zierbaren Programm,
- FIG 2: eine schematische Darstellung eines erfindungsgemäßen Verfahrens zur automatischen Modifikation eines Pro- gramms eines Automatisierungssystems und
- FIG 3: eine schematische Darstellung eines Kommunikations- netzes zusammen mit dem Verfahren wie in FIG 2 darge- stellt, mit Auswahl, Übertragung und Wirksamschaltung eines Programmcodeobjekts.

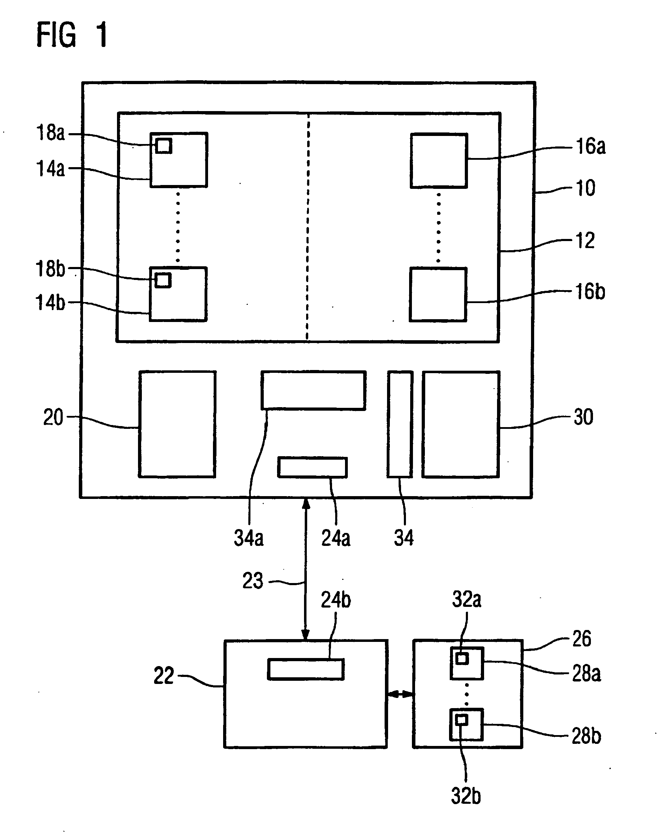

FIG 1 zeigt schematisch ein Automatisierungssystem 10 mit einem automatisch modifizierbaren Programm 12. Dabei umfasst das Programm 12 zumindest eine Firmwarekomponente 14a. Gegebenenfalls können jedoch weitere Firmwarekomponenten 14b und/oder zumindest eine Programmkomponente 16a umfasst sein. Ein erstes Datum 18a, 18b ist dabei auf die Firmwarekomponente 14a, 14b bezogen und/oder kann z. B. für die Firmwarekomponente 14a, 14b in einer nicht dargestellten Datenbank hinterlegt sein. Ein dem Automatisierungssystem 10 zugeordnetes Identifikationsmittel 20 ermittelt ein der Firmwarekomponente 14a, 14b zugehöriges erstes Datum 18a, 18b. Das Automatisierungssystem 10 und ein entfernt von diesem angeordneter Server 22 kommunizieren dabei leitungsgebunden oder leitungslos über eine Kommunikationsverbindung 23, z. B. unter Verwendung an sich bekannter Schnittstellen 24a, 24b. Über den Server 22 wird dabei auf eine Datenbasis 26 zugegriffen, in welcher Programmcodeobjekte 28a, 28b, hinterlegt sind. Dieser Zugriff erfolgt von einem, dem Automatisierungssystem 10 zugeordneten Auswahlmittel 30, welches als Hard- oder Software oder eine Kombination daraus ausgeführt sein kann. Auf Basis des mittels des Identifikationsmittels 20 ermittelten ersten Datums 18a, 18b wird von dem Auswahlmittel 30 ein Programmcodeobjekt 28a, 28b, 28c ausgewählt. Für jedes Programmcodeobjekt 28a, 28b, 28c ist ein dem ersten Datum 18a, 18b entsprechendes oder ein mit diesem ersten Datum 18a, 18b korrespondierendes Datum - viertes Datum 32a, 32b - ermittelbar oder hinterlegt. Das mittels des Auswahlmittels 30 ausgewählte Programmcodeobjekt 28a, 28b, 28c wird in das Automatisierungssystem 10 übertragen. Ein Integrationsmittel 34 des Automatisierungssystems 10 integriert das ausgewählte Programmcodeobjekt 28a, 28b, 28c in das Programm 12. Dabei wird das ausgewählte Programmcodeobjekt 28a, 28b, 28c insbesondere als Firmwarekomponente 14a, 14b in das Programm 12 integriert. Andere Programmcodeobjekte 28a, 28b, 28c können auch als eine Programmkomponente 16a, 16b in das Programm 12 integriert werden. Die Integration des Programmcodeobjekts 28a, 28b, 28c in das Programm 12 dient dabei der Modifikation des Programms 12 und kann beispielsweise während der Übertragung des Programmcodeobjekts 28a, 28b, 28c in das Automatisierungssystem 10 oder im Anschluss an das Übertragen erfolgen. Dabei kann, wenn die Integration im Anschluss an das Übertragen in das Automatisierungssystem 10 erfolgt, das Integrieren beispielsweise im Zusammenhang mit einer Initialisierung, einem Abschluss, einer Unterbrechung, einer Pause, einem Ablauf des Programms 12 oder dergleichen erfolgen. Dabei überprüft das Integrationsmittel 34, ob die automatische Modifikation ohne eine Beeinträchtigung eines Programmablaufs durchgeführt werden kann. Alternativ kann das Integrationsmittel 34 z. B. mittels des Programms 12, des Automatisierungssystems 10 oder mittels eines Signals (nicht dargestellt), welches von einem mit dem Programm 12 oder dem Automatisierungssystem assoziierten Initialisierungsmittel 34a erzeugt wird, gesteuert werden, also z. B. getriggert, unterbrochen, beendet und dergleichen.

Identifikationsmittel 20, Auswahlmittel 30 und/oder Integrationsmittel 34 können als Software und/oder als Hardware ausgeführt sein und z. B. ein integraler Bestandteil des Automatisierungssystems 10 sein, hier beispielsweise insbesondere dem Programm 12 zugeordnete Bestandteile, wie z. B. Unterprogramme, Programmkomponenten und dergleichen.

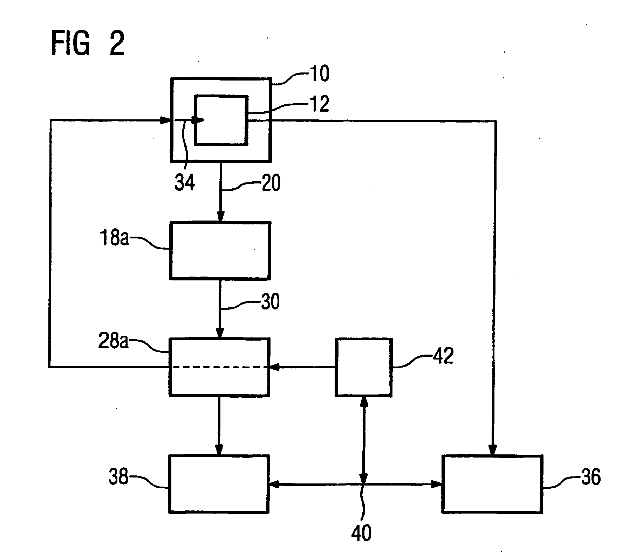

FIG 2 zeigt eine schematische Darstellung des erfindungsgemäßen Verfahrens zur automatischen Modifikation des Programms 12. Dabei wird zunächst das auf die Firmwarekomponente 14a, 14b bezogene und/oder für diese hinterlegte erste Datum 18a vom Identifikationsmittel 20 ermittelt. Auf Basis diesen ersten Datums 18a wird ein in der Datenbasis 26 (siehe FIG 1) hinterlegtes Programmcodeobjekt 28a mittels des Auswahlmittels 30 ausgewählt. Ein aus dem Programm 12 ermitteltes und/oder für dieses Programm 12 hinterlegtes zweites Datum 36 wird mit einem aus dem Programmcodeobjekt 28a ermittelten und/oder für dieses hinterlegten dritten Datum 38 verglichen, z. B. mittels eines Vergleichers 40, welcher als Soft-und/oder Hardware ausgeführt sein kann. Dabei kann das zweite Datum 36 beispielsweise identisch mit dem ersten Datum 18a sein oder aus diesem ermittelbar sein, z. B. mittels eines Algorithmus. Wenn der Vergleich ergibt, dass ein Auswahlkriterium 42 für das Programmcodeobjekt 28a erfüllt ist, also z. B. das Programmcodeobjekt 28a aktueller ist als die Firmwarekomponente 14a, 14b (in FIG 1 dargestellt), so erfolgt die Integration des Programmcodeobjekts 28a in das Programm 12. Hierzu wird zunächst das Programmcodeobjekt 28a in das Automatisierungssystem 10 übertragen. Zusammen mit der Übertragung zum Automatisierungssystem 10 erfolgt die Modifikation des Programms 12, welche beispielsweise mittels des Integrationsmittels 34 (wie in FIG 1 dargestellt) bewerkstelligt wird.

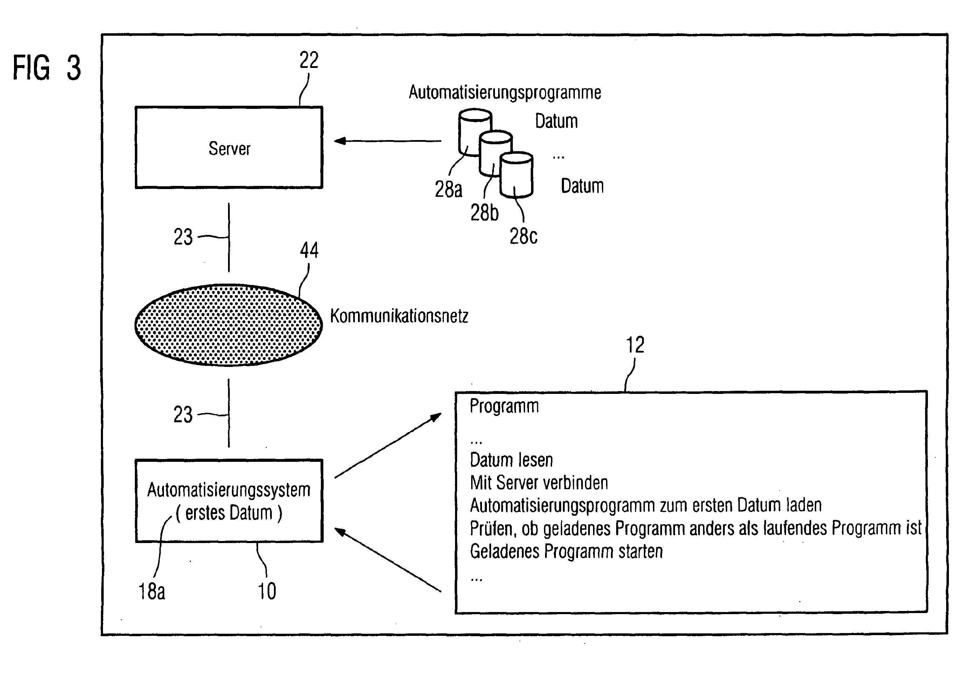

FIG 3 zeigt eine schematische Darstellung eines Kommunikationsnetzes 44 zusammen mit dem Verfahren wie in FIG 2 dargestellt. Im Automatisierungssystem 10 wird das erste Datum 18a ermittelt. Das Automatisierungssystem 10 stellt eine kommunikative Verbindung 23 mit dem Server 22 her. Mittels des Auswahlmittels 30 (in FIG 1 dargestellt) wird sodann ein Programmcodeobjekt 28b aus einer Anzahl von Programmcodeobjekten 28a, 28b, 28c ausgewählt und über den Server 22 und die kommunikative Verbindung 23, hier Kommunikationsnetz 44, in das Automatisierungssystem 10 übertragen. Bei der Auswahl oder im Zusammenhang mit der Übertragung des Programmcodeobjekts 28b wird überprüft, ob das Programmcodeobjekt 28b aktueller als die Programmkomponente 16a, 16b ist. Im Anschluss an die Überprüfung wird, wenn die Überprüfung ergeben hat, dass das Programmcodeobjekt 28b aktueller ist, dieses in das Programm 12 integriert und somit das Programm 12 modifiziert. Hierbei wird das Programmcodeobjekt 28b insbesondere als Firmwarekomponente 14a, 14b (in FIG 1 dargestellt) integriert. Dabei kann das Programm 12 während, vor oder nach einer Laufzeit modifiziert werden. Dabei kann mittels des Initialisierungsmittels 34a sichergestellt sein, dass das Programm 12, Teile des Programms 12 oder ein Ablauf davon zu einem Integrationszeitpunkt des Programmcodeobjekts 28a, 28b, 28c in das Programm 12 nicht beeinträchtigt wird, so dass beispielsweise ein vom Automatisierungssystem 10 oder von Bestandteilen des Automatisierungssystems 10 ausgeführter Automatisierungsvorgang nicht gestört und/oder abgebrochen wird.

Damit lässt sich des Beschriebene kurz wie folgt darstellen: Angegeben wird ein Verfahren zur automatischen Modifikation eines Programms 12 eines Automatisierungssystems 10, wobei mittels eines dem Automatisierungssystem 10 zugeordneten Identifikationsmittels 20 ein auf eine Programmkomponente 16a, 16b des Programms 12 bezogenes erstes Datum 18a, 18b ermittelt wird, wobei mittels eines Auswahlmittels 30 auf Basis des ersten Datums 18a, 18b ein in zumindest einer Datenbasis 26 hinterlegtes oder hinterlegbares Programmcodeobjekt 28a, 28b, 28c ausgewählt wird und wobei das Programm 12 mittels des Programmcodeobjekts 28a, 28b, 28c zumindest teilweise modifiziert wird, indem das Programmcodeobjekt 28a, 28b, 28c in das Programm 12 integriert wird, sowie ein Automatisierungssystem 10 mit einem insbesondere zumindest Firmwarekomponenten 14a, 14b umfassenden, automatisch nach dem Verfahren modifizierbaren Programm 12, mit einem zugeordneten Identifikationsmittel 20 zur Ermittlung eines auf eine Programmkomponente 16a, 16b, insbesondere eine Firmwarekomponente 14a, 14b, bezogenen ersten Datums 18a, 18b, mit einem Auswahlmittel 30 zur Auswahl eines in zumindest einer Datenbasis 26 hinterlegten oder hinterlegbaren Programmcodeobjekts 28a, 28b, 28c auf Basis des ersten Datums 18a, 18b und einem Integrationsmittel 34 zur Integration des Programmcodeobjekts 28a, 28b, 28c, insbesondere als Firmwarekomponente 14a, 14b, in das Programm 12 und schließlich ein Computerprogramm mit durch einen Computer ausführbaren Programmcodeanweisungen zur Implementierung eines solchen Verfahrens und ein Computerprogrammprodukt, insbesondere Speichermedium, mit einem solchen Computerprogramm.

## Patentansprüche

1. Verfahren zur automatischen Modifikation eines Programms (12) eines Automatisierungssystems (10),
wobei mittels eines dem Automatisierungssystem (10) zugeordneten Identifikationsmittels (20) ein auf eine Programmkomponente (16a, 16b) des Programms (12) bezogenes erstes Datum (18a, 18b) ermittelt wird,
wobei mittels eines Auswahlmittels (30) auf.Basis des ersten Datums (18a, 18b) ein in zumindest einer Datenbasis (26) hinterlegtes oder hinterlegbares Programmcodeobjekt (28a, 28b, 28c) ausgewählt wird,
wobei das Programm (12) mittels des Programmcodeobjekts (28a, 28b, 28c) zumindest teilweise modifiziert wird, indem das Programmcodeobjekt (28a, 28b, 28c) in das Programm (12) integriert wird,
wobei Programmcodeobjekte (28a, 28b, 28c) zur Produktion durch eine Maschine mit einem oder mehreren Automatisierungssystemen erforderliche Daten umfassen,
wobei automatisch oder durch einen Anwender im Zusammenhang mit einem Zeitpunkt, zu dem diese Produktion stattfinden soll, auf einem Server und/oder in der dem Server zugeordneten Datenbasis hinterlegt sind,
wobei das Automatisierungssystem permanent oder in zeitlichen Abständen nach passenden Programmcodeobjekten (28a, 28b, 28c) sucht und diese automatisch von dem Server oder aus der Datenbasis lädt, wobei das geladene Programmcodeobjekt (28a, 28b, 28c) insbesondere automatisch aktiviert wird,
wobei ein in der Datenbasis hinterlegtes Datenobjekt ein auf einen Produktionsvorgang bezogenes weiteres Datum oder bezogenen Datensatz darstellt oder in seiner Ausprägung als Programmcodeobjekt (28a, 28b, 28c) solche Daten umfasst,
wobei das Datum oder der Datensatz zumindest eine Werkzeugidentifikation beschreibt, und
wobei derart an einer zentralen Stelle für ein Automatisierungssystem oder eine Gruppe von Automatisierungssystemen produktionsprozess-relevante Daten hinterlegt werden, wo sie dem oder den Automatisierungssystem/en zum Abruf bereitstehen.

2. Verfahren gemäß Anspruch 1 wobei zumindest ein auf die Programmkomponente (16a, 16b) des Programms (12) bezogenes zweites Datum (36) und zumindest ein auf das ausgewählte Programmcodeobjekt (28a, 28b, 28c) bezogenes drittes Datum (38) verglichen werden und das Programm (12) in Abhängigkeit von einem Ergebnis des Vergleichs zumindest teilweise modifiziert wird,
wobei das zweite und das dritte Datum (36, 38) eine Versionsnummer, ein Erstellungsdatum, ein Änderungsdatum und/oder eine Referenznummer sind bzw. ist und
wobei das erste Datum (18a, 18b) eine Versionsnummer, ein Erstellungsdatum, ein Änderungsdatum, eine Referenznummer und/oder eine Hardwareidentifikation sind bzw. ist.

3. Verfahren gemäß Anspruch 1 oder 2 wobei das Programm zumindest Firmwarekomponenten (14a, 14b) umfasst
wobei mittels eines dem Automatisierungssystem (10) zugeordneten Identifikationsmittels (20) ein auf eine Firmwarekomponente (14a, 14b) als Programmkomponente (16a, 16b) bezogenes erstes Datum (18a, 18b) ermittelt wird und
wobei das Programm (12) mittels des Programmcodeobjekts (28a, 28b, 28c) zumindest teilweise modifiziert wird, indem das Programmcodeobjekt (28a, 28b, 28c) als Firmwarekomponente (14a, 14b) in das Programm (12) integriert wird.

4. Verfahren gemäß einem der vorangehenden Ansprüche,
wobei die Datenbasis (26) einem entfernt vom Automatisierungssystem (10) angeordneten Server (22) zugeordnet ist.

5. Verfahren gemäß einem der vorangehenden Ansprüche,
wobei das Auswahlmittel (30) und/oder das Identifikationsmittel (20) Programmkomponenten (16a, 16b) des Programms (12) sind bzw. ist.

6. Verfahren gemäß einem der vorangehenden Ansprüche,
wobei das zweite Datum (36) aus dem Programm (12) und/oder das dritte Datum (38) aus dem Programmcodeobjekt (28a, 28b, 28c) entnehmbar oder ermittelbar sind bzw. ist.

7. Verfahren gemäß einem der vorangehenden Ansprüche,
wobei mittels eines Initialisierungsmittels (34a) die automatische Änderung im Zusammenhang mit einer Initialisierung des Programms (12), einem Programmabschluss, einer Programmunterbrechung und/oder einer Programmpause aufgerufen wird und/oder wobei das Initialisierungsmittel (34a) prüft, ob die automatische Modifikation durchgeführt werden kann.

8. Verfahren gemäß einem der vorangehenden Ansprüche,
wobei das Programm (12) ausschließlich in einem nichtflüchtigen Speicher hinterlegte oder hinterlegbare Firmwarekomponenten (14a, 14b) umfasst.

## Claims

1. Method for automatically modifying a program (12) of an automation system (10),
wherein a first item of data (18a, 18b) relating to a program component (16a, 16b) of the program (12) is determined with the aid of an identification means (20) associated with the automation system (10),
wherein a program code object (28a, 28b, 28c) which is stored or can be stored in at least one database (26) is selected with the aid of a selection means (30) on the basis of the first item of data (18a, 18b),
wherein the program (12) is at least partially modified by means of the program code object (28a, 28b, 28c) in that the program code object (28a, 28b, 28c) is integrated into the program (12),
wherein program code objects (28a, 28b, 28c) include data required for production by means of a machine comprising one or more automation systems,
wherein the program code objects (28a, 28b, 28c) are stored automatically or by a user on a server and/or in the database assigned to the server in connection with a time at which said production is to take place,
wherein the automation system searches continuously or at time intervals for suitable program code objects (28a, 28b, 28c) and loads these automatically from the server or from the database, with the loaded program code object (28a, 28b, 28c) being activated in particular automatically,
wherein a data object stored in the database represents a further item of data or data record relating to a production process or in its embodiment as a program code object (28a, 28b, 28c) includes such data,
wherein the item of data or data record describes at least a tool identification, and
wherein data relevant to production processes for an automation system or a group of automation systems is stored in such a way at a central point that it is available to the automation system or systems for retrieval.

2. Method according to claim 1, wherein at least one second item of data (36) relating to the program component (16a, 16b) of the program (12) and at least one third item of data (38) relating to the selected program code object (28a, 28b, 28c) are compared and the program (12) is at least partially modified as a function of a result of the comparison,
wherein the second and third items of data (36, 38) are a version number, a creation date, a modification date and/or a reference number, and
wherein the first item of data (18a, 18b) is a version number, a creation date, a modification date, a reference number and/or a hardware identification.

3. Method according to claim 1 or 2, wherein the program comprises at least firmware components (14a, 14b),
wherein a first item of data (18a, 18b) relating to a firmware component (14a, 14b) as a program component (16a, 16b) is determined with the aid of an identification means (20) associated with the automation system (10), and
wherein the program (12) is at least partially modified by means of the program code object (28a, 28b, 28c) in that the program code object (28a, 28b, 28c) is integrated into the program (12) as a firmware component (14a, 14b).

4. Method according to one of the preceding claims,
wherein the database (26) is assigned to a server (22) disposed remotely from the automation system (10).

5. Method according to one of the preceding claims,
wherein the selection means (30) and/or the identification means (20) are program components (16a, 16b) of the program (12).

6. Method according to one of the preceding claims,
wherein the second item of data (36) can be extracted or determined from the program (12) and/or the third item of data (38) can be extracted or determined from the program code object (28a, 28b, 28c).

7. Method according to one of the preceding claims,
wherein the automatic modification is invoked with the aid of an initialisation means (34a) in connection with an initialisation of the program (12), a program termination, a program interruption and/or a program pause, and/or wherein the initialisation means (34a) checks whether the automatic modification can be performed.

8. Method according to one of the preceding claims,
wherein the program (12) exclusively comprises firmware components (14a, 14b) which are stored or can be stored in a non-volatile memory.

## Revendications

1. Procédé de modification automatique d'un programme ( 12 ) d'un système ( 10 ) d'automatisation,
dans lequel on détermine, à l'aide d'un moyen ( 20 ) d'identification affecté au système ( 10 ) d'automatisation, une première donnée ( 18a, 18b ) se rapportant à un composant ( 16a, 16b ) du programme ( 12 ),
dans lequel on choisit, à l'aide d'un moyen ( 30 ) de sélection, sur la base de la première donnée ( 18a, 18b ), un objet ( 28a, 28b, 28c ) de code de programme mémorisé dans au moins une base ( 26 ) de données ou pouvant l'être,
dans lequel on modifie au moins en partie le programme ( 12 ) à l'aide de l' objet ( 28a, 28b, 28c ) de code de programme en intégrant l'objet ( 28a, 28b, 28c ) de code de programme dans le programme ( 12 ),
dans lequel des objets ( 28a, 28b, 28c ) de code de programme comprennent des données nécessaires à la production par une machine ayant un système d'automatisation ou plusieurs systèmes d'automatisation,
dans lequel on les mémorise automatiquement ou par un utilisateur en liaison avec un instant où cette production doit avoir lieu sur un serveur et/ou dans la base de données affectée au serveur,
dans lequel le système d'automatisation cherche en permanence ou à des intervalles de temps des objets ( 28a, 28b, 28c ) de code de programme qui s'adaptent et les charge automatiquement par le serveur ou à partir de la base de données, l'objet ( 28a, 28b, 28c ) de code de programme chargé étant activé notamment automatiquement,
dans lequel un objet de données mémorisé dans la base de données représente une autre donnée se rapportant à une opération de production ou un jeu de données s'y rapportant ou comprend dans son expression comme objet ( 28a, 28b, 28c ) de code de programme,des données de ce genre,
dans lequel la donnée ou le jeu de données décrit au moins une identification d'outil, et
dans lequel on mémorise des données pertinentes pour l'opération de production en un point central pour un système d'automatisation ou pour un groupe de systèmes d'automatisation, de manière à ce qu'elles y soient disponibles sur appel pour le ou les systèmes d'automatisation.

2. Procédé suivant la revendication 1, dans lequel on compare au moins une deuxième donnée ( 36 ) se rapportant au composant ( 16a, 16b ) du programme ( 12 ) et au moins une troisième donnée ( 38 ) se rapportant à l'objet ( 28a, 28b, 28c ) de code de programme choisi et on modifie au moins en partie le programme ( 12 ) en fonction d'un résultat de la comparaison,
dans lequel la deuxième et la troisième données ( 36, 38 ) sont un numéro de version, une date d'élaboration, une date de modification et/ou un numéro de référence, et dans lequel la première donnée ( 18a, 18b ) est un numéro de version, une date d'élaboration, une date de modification, un numéro de référence et/ou une identification de matériel.

3. Procédé suivant la revendication 1 ou 2, dans lequel le programme comprend au moins des composants ( 14a, 14b ) micro logiciels, dans lequel, à l'aide d'un moyen ( 20 ) d'identification affecté au système ( 10 ) d'automatisation, on détermine une première donnée ( 18a, 18b ) se rapportant comme composant ( 16a, 16b ) de programme à un composant ( 14a, 14b ) micrologiciel et
dans lequel on modifie au moins en partie le programme ( 12 ) à l'aide de l'objet ( 28a, 28b, 28c ) de code de programme, en intégrant l'objet ( 28a, 28b, 28c ) de code de programme dans le programme ( 12 ) en tant que composant ( 14a, 14b ) micro logiciel.

4. Procédé suivant l'une des revendications précédentes, dans lequel on affecte la base ( 26 ) de données à un serveur ( 22 ) qui est éloigné du système ( 10 ) d'automatisation.

5. Procédé suivant l'une des revendications précédentes, dans lequel le moyen ( 30 ) de sélection et/ou le moyen ( 20 ) d'identification est ou sont des composants ( 16a, 16b ) du programme ( 12 ).

6. Procédé suivant l'une des revendications précédentes, dans lequel la deuxième donnée ( 36 ) peut être prélevée ou peut être déterminée à partir du programme ( 12 ) et/ou la troisième donnée ( 38 ) peut être prélevée ou peut être déterminée à partir de l'objet ( 28a, 28b, 28c ) de code de programme.

7. Procédé suivant l'une des revendications précédentes, dans lequel, à l'aide d'un moyen ( 34a ) d'initialisation, on appelle la modification automatique en liaison avec une initialisation du programme ( 12 ) d'une fin de programme, d'une interruption de programme et/ou d'un arrêt dans le programme et/ou dans lequel on contrôle le moyen ( 34a ) d'initialisation sur le point de savoir s'il peut effectuer la modification automatique.

8. Procédé suivant l'une des revendications précédentes, dans lequel le programme ( 12 ) comprend exclusivement des composants ( 14a, 14b ) micrologiciels mémorisés dans une mémoire non volatile ou pouvant l'être.
